# EUROPEAN PATENT APPLICATION

(11) **EP 4 670 948 A2**
(43) Date of publication of application: **31.12.2025**
(21) Application number: 25215245.9
(22) Date of filing: 06.02.2024
(51) Int. Cl.: B29C 45/44

(54) **POWDER INJECTION MOLDING APPARATUS FOR MOLDING A DENTAL ARTICLE**

(30) Priority: 09.02.2023 EP 23155824
(62) Divisional of application: 24703381.4
(71) Applicant: Institut Straumann AG, 4002 Basel (CH)
(72) Inventor: BORDOLI, Gabriele, 2502 Biel (CH); DORN, Michael Thomas, 79713 Bad Säckingen (DE)
(74) Representative: Schaad, Balass, Menzl & Partner AG

(57) **Abstract**

The present invention relates to a powder injection molding apparatus for molding a dental article, said apparatus comprising
A) an injection unit (16) comprising a barrel (18), a nozzle (24) and conveying means arranged in the barrel for conveying feedstock in the direction towards the nozzle, and
B) a mold (10) enclosing a mold cavity (14) fluidically connected with the injection unit via a mold gate (30), said mold cavity extending along a longitudinal axis A from a proximal cavity area (36), into which the mold gate opens, to a distal cavity area (40),
The apparatus is characterized in that the mold comprises a mold block (11) and a mold piston (32), which together delimit the mold cavity (14), the mold piston (32) being slideably arranged in the mold block (11) and moveable in relation to the mold block (11) along the longitudinal axis A, that an end region (42) of the mold piston (32) reaching into the mold cavity (14) has the form corresponding to a blind hole arranged in the dental article to be molded, that the end region (42) further comprises a shaft portion (48), which in the longitudinal direction of the mold piston (32) pointing away from the mold cavity (14) is arranged adjacent to the leading end portion (46), wherein at least part of the shaft portion has the shape of a non-circular cylinder corresponding to a respective opening in the blind hole of the dental article to be molded, that the mold piston (32) comprises a sleeve (54) and a core pin (56), which is circumferentially enclosed by the sleeve and is rotatable in relation to the sleeve, the core pin forming the leading end portion (46) and the sleeve (54) forming the shaft portion (48) of the mold piston (32) and that the mold piston (32) further contains a ram element (58) arranged coaxially to the sleeve (54) and circumferentially enclosing the sleeve, said ram element being axially movable in relation to the sleeve.

## Description

The present invention relates to a powder injection molding (PIM) apparatus for molding a dental article, and to a process for the preparation of a dental article, in particular a dental implant or a dental implant abutment, using the powder injection molding apparatus.

Ceramic dental implants or implant abutments are typically prepared by pressing a ceramic powder dispersed in a binder to a so-called green body, followed by a removal of the binder from the green body in a debinding (or "debindering") step to form a brown body, which is then sintered and subjected in some cases to hot isostatic processing (HIP), typically followed by grinding the body.

For providing complex structural features to the article to be produced, such as an outer thread of the dental implant (for screwing it into the bone and obtaining a primary stability after implantation) or an inner thread (for connecting an abutment to the dental implant), the sintered body is then subjected to a machining step.

In aiming at avoiding laborious post-treatment steps, such as HIP and grinding, and reducing the effort for machining the final geometry out of the sintered body, suggestions have been made in the past to prepare implants or implant abutments by injecting molding techniques.

EP-A-1570804, for example, discloses a dental implant comprising an outer body made of ceramic or metal and an inner body made of metal or ceramic, wherein the metal body is produced by metal injection molding (MIM) and the ceramic body is produced by ceramic injection molding (CIM).

Further, DE-A-19530981 discloses a post system of an implant structure, the post being formed by injection molding a composition comprising polyoxymethylene and zirconium dioxide powder.

US 6,280,193 relates to a dental implant comprising zirconium oxide, the implant having an external thread screwable in the osseous tissues and an internal tapping obtained by molding.

A zirconium oxide dental implant manufactured by injecting a zirconium oxide paste in a mold for obtaining a green body and sintering the green body to the zirconium oxide dental implant, is further disclosed in US 2012/0301849.

Although complex structures can in theory be obtained by CIM or MIM (both falling within the definition of powder injection molding/PIM), it has been found that conventional PIM techniques result in a relatively poor process stability. In particular, implants or implant abutments prepared by conventional CIM or MIM are prone to surface defects, due to the high viscosity of the feedstock and therefore an imperfect filling of the mold cavity.

For improving the flow behaviour of the feedstock, the mold can be pre-heated, thus prolonging hardening of the feedstock and, hence, the window for injection.

In aiming at a stable PIM, which allows for an improved filling of the mold cavity without an increase in the cycle time, EP 3 826 791 teaches a process in which the step of injecting the heated feedstock into the mold cavity of the mold is carried out under the application of vibrational energy onto the feedstock. Although a decreased surface porosity and volume flaws and, hence, an improved bend strength can be achieved according to the process of EP 3 826 791, there is the remaining problem of the feedstock suffering a pressure drop along its path through the mold cavity during filling. This is particularly disadvantageous if a feedstock of a relatively high viscosity and/or of a low pressure transition is used for the molding.

The problem is further aggravated if the article to be molded is relatively lengthy in shape, as it is the case for a dental implant or a dental implant abutment. When molding such an article, the feedstock has to travel along the whole axial length of the mold cavity, namely from a proximal cavity area, into which the mold gate opens, to a distal cavity area, *i.e.* the area in the cavity furthest away from the mold gate. In particular, in this distal cavity area, the pressure drop can lead to a reduced density of the feedstock and, after cooling, to defects in the respective portion of the article, which in the case of a dental implant corresponds to the coronal portion of the implant. This is particularly disadvantageous for dental implants of a two-part dental implant system, since the coronal portion is the portion with the most delicate structures, namely the inner thread of the blind bore adapted to receive and fixedly attach the abutment of the dental implant system.

The problem to be solved by the present invention is thus to provide a powder injection molding apparatus, which allows an improved filling of the mold cavity to be achieved. Specifically, the apparatus shall allow an essentially homogenous density of the feedstock to be achieved over the entire volume of the mold cavity. More specifically, the apparatus shall allow an improved density of the feedstock in the distal cavity area of the mold cavity to be achieved. Ultimately, the apparatus shall allow defects in the molded dental article, in particular, in the portion corresponding to the distal cavity area of the mold cavity, to be reduced or even avoided.

The problem is solved by the apparatus according to claim 1. Preferred features are defined in the dependent claims.

According to claim 1, the powder injection apparatus is designed for molding a dental article, in particular a dental implant or a dental implant abutment. The term "powder injection molding" covers both ceramic injection molding (CIM) or metallic injection molding (MIM). In particular, the apparatus of the present invention is designed for CIM.

As further defined in claim 1, the apparatus of the invention comprises
A) an injection unit comprising a barrel, a nozzle and conveying means arranged in the barrel for conveying feedstock in the direction towards the nozzle, and
B) a mold enclosing a mold cavity fluidically connected with the injection unit via a mold gate, said mold cavity extending along a longitudinal axis A from a proximal cavity area, into which the mold gate opens, to a distal cavity area.

The invention is characterized in that the mold comprises a mold block and a mold piston, which together delimit the mold cavity, the mold piston being slideably arranged in the mold block and moveable in relation to the mold block along the longitudinal axis A.

In the context of the present invention, it has been found that by using the apparatus as defined in claim 1, a complete filling of the mold cavity and, hence, an accurate replication of structural details in the molded article can be achieved. Surprisingly, it has further been found that the tendency for the formation of cracks or porosities is much lower than with previously described PIM techniques. By diminishing such surface and volume defects, a higher bend strength and, hence, a higher performance of the article to be produced can ultimately be achieved. This is explained in further detail below in the context of the specific methods and concepts of the PIM using the apparatus of the present invention.

Specifically, the present invention allows very delicate or intricate configurations of the mold cavity to be accurately replicated, even if a feedstock of high viscosity, *e.g.* a feedstock having a flow rate of below 0.15 ml/s, is used for the molding. In terms of the quality control of the dental article, the invention allows geometrical tolerances to be reduced and, hence, a higher forming quality to be achieved. In particular, the invention allows a workflow to be implemented, resulting in less deviations and an improved dimension stability of the molded articles.

As mentioned, the present invention allows a feedstock having a flow rate of below 0.15 ml/s to be used without compromising the forming quality. Specifically, the "flow rate" as used in this context relates to the flow rate as measured based on ISO 1133 at 160°C and a cylinder pressure 4.9·10⁶ Pa. More specifically, the flow rate referred to is measured by using a Flow-Tester CFT-500D (of Shimadzu Corporation, Tokyo, Japan) with a die size defined by a diameter of 1 mm and a length of 2 mm.

As will be explained in more details in the context of the method for preparing the dental article, the apparatus allows the improved filling to be achieved via two basic procedures, which can be carried out separately or in combination with each other.

According to a secondary procedure, the apparatus is, before filling, set to an initial stage mode M1, in which the mold piston is set such that the mold cavity has a volume Vᵢₙᵢₜᵢₐₗ. A first portion of the feedstock is then filled into the mold cavity by injecting it from the injection unit through the mold gate until a pressure p₀ is reached in the mold cavity. This pressure is sufficiently high that even very intricate or delicate structures within the mold are reproduced in the molded product. In particular, the inner thread of the blind hole of a dental implant can be accurately reproduced.

After the filling with this first portion of the feedstock, the filling is continued with a second portion of the feedstock while simultaneously moving the piston in direction of the longitudinal axis A away from the mold gate, thus increasing the volume in the mold cavity. Hence, the blind hole structures that have already been formed, are continuously moved away from the mold gate allowing the remaining structures within the mold cavity to be continuously formed while constantly injecting the feedstock at high pressure. The problem of an insufficient density of the feedstock at the distal cavity area can thereby be circumvented.

In the context of this embodiment of the present invention, the term "high pressure" typically relates to a pressure of between 500 bar and 2500 bar. In the specific context of the molding of a dental implant, the "high pressure" is typically a pressure between 500 bar and 1000 bar.

According to a primary procedure of the invention, an embodiment of the apparatus is used, in which the mold piston comprises a sleeve, a core pin and a ram element. This embodiment will be described in detail below. In this primary procedure, the apparatus is first set to an initial stage mode M2, in which the core pin and the sleeve are set to their final position, which is the position corresponding to the position of the blind hole in the dental article to be molded.

Feedstock is then filled into the mold cavity by injecting it from the injection unit through the mold gate. After filling the ram element is moved along longitudinal axis A relative to the core pin and the sleeve to decrease the volume of the mold cavity until the ram element reaches its final position.

The feedstock is then solidified by cooling to obtain the final shape of the dental article, and the dental article is demolded.

Owed to the compacting caused by the pressing force of the ram element, a lower density of the feedstock in the distal cavity area, which might occur due to the pressure drop of the feedstock during filling, can be compensated after filling.

Ultimately, molded dental articles of a decreased surface porosity and of an improved volume flaw distribution, like *e.g.* flow-lines, voids, and decompositions, can be obtained by the present invention, in particular by reducing the free jetting behaviour of the feedstock during the molding and its effect on the final article. Hence, an improved bend strength of the molded dental article, even if complex geometries are to be provided by the molding process.

According to a preferred embodiment of the apparatus of the present invention, the injection unit and/or the mold comprise a heating element for heating the feedstock. This allows the window for injection to be prolonged for a duration required for the filling of the mold cavity to be complete. In particular, the heating element is designed such that directly before injection, *i.e.* at the nozzle of the transfer channel and/or at the mold gate, the temperature of the feedstock is in a range of from 160°C to 200°C. Preferably, the heating element relating to the mold is designed such to keep the mold at a temperature in a range from room temperature to 60°C.

According to a further preferred embodiment of the apparatus, the mold piston is arranged in the mold block such that during its movement along the longitudinal axis A the volume of the mold cavity is decreased. This allows the improved filling by either of the two basic concepts discussed above, or by a combination of the concepts.

In view of the secondary concept (in which, after filling a first portion of the feedstock at an initial stage mode, the filling is continued with a second portion of the feedstock while simultaneously moving the piston in direction of the longitudinal axis A away from the mold gate), the mold piston is preferably arranged in the mold block such that during its movement in direction away from the mold gate, the volume of the mold cavity is increased.

According to a particularly preferred embodiment, the mold piston comprises a guiding region extending in longitudinal direction and being in the form of a cylinder, the mantle surface of which being fitted into a guiding tube arranged in the mold block, *i.e*. in the sense that the form and size of the cylinder corresponds to the form and size of the guiding tube. This ensures an uniaxial movement of the mold piston, and thus a precise location of the respective structure in its final position in the distal cavity area. In addition, the arrangement of the mold piston in the mold block according to this embodiment ensures that no feedstock can enter the guiding tube. Hence, there is no need to remove unwanted protrusions from the molded article in a post-treatment step.

According to the invention, an end region of the mold piston reaching into the mold cavity has the form corresponding to a blind hole arranged in the dental article to be molded, specifically a blind hole extending in a longitudinal direction of the dental article. This is in particular the case for an apparatus for molding a dental implant, which in general comprises a blind hole with an inner thread adapted to receive and fixedly attach the abutment of the dental implant system.

In this regard, it is particularly preferred that the end region comprises a leading end portion, at least a part of which having the shape of an outer thread corresponding to an inner thread in the blind hole of the dental article to be molded, and more particularly of the blind hole of the dental implant.

As discussed above, the apparatus of the present invention allows the blind hole to be accurately replicated, even in case a feedstock of a relatively high viscosity is used.

According to the invention, the end region further comprises a shaft portion, which in the longitudinal direction of the mold piston pointing away from the mold cavity is arranged adjacent to the leading end portion, wherein at least part of the shaft portion has the shape of a non-circular cylinder corresponding to a respective opening in the blind hole of the dental article to be molded. More specifically, the shaft portion has the shape of a multi-cornered shaft, such as a four cornered shaft (or square), or a hexagonal shaft. In this context, the term "cornered" also covers shafts having rounded corners. An opening with a corresponding shape allows rotational fixation of the abutment received in the blind bore.

In this regard, the mold piston comprises a sleeve and a core pin, which is circumferentially enclosed by the sleeve and is rotatable in relation to the sleeve, the core pin forming the leading end portion and the sleeve forming the shaft portion of the mold piston. As will be explained in detail in connection with the figures, this arrangement allows for a simple de-molding by rotating the core pin to unscrew it from the molded dental article and to move the core pin and the sleeve axially in a direction out of the mold cavity. After separating the mold parts, the molded article can then be removed from the mold cavity.

In view of the basic procedure discussed above, the mold piston further contains a ram element arranged coaxially to the sleeve and circumferentially enclosing the sleeve, said ram element being axially movable in relation to the sleeve. In this regard, it is further preferred that the ram element comprises a pressing surface which lies in a plane at least approximately perpendicular to the longitudinal axis A of the mold cavity.

As discussed above, the apparatus allows the improved filling to be achieved via two basic procedures, which can be carried out separately or in combination with each other for preparing the dental article.

Thus, apart from the apparatus described above, the present invention relates also to a process for the preparation of a dental article, in particular a dental implant or a dental implant abutment, using the powder injection molding apparatus.

According to a secondary aspect, the process of the invention comprises the steps of
a) setting the apparatus to an initial stage mode M1, in which the mold piston (32) is set such that the mold cavity (14) has a volume Vᵢₙᵢₜᵢₐₗ;
b) filling a first portion of the feedstock into the mold cavity (14) by injecting it from the injection unit (16) through the mold gate (30) until a pressure p₀ is reached in the volume Vᵢₙᵢₜᵢₐₗ of the mold cavity;
c) continuing filling with a second portion of the feedstock while simultaneously moving the mold piston (32) in direction of the longitudinal axis A away from the mold gate (30), thus increasing the volume of the mold cavity (14);
d) after filling solidifying the feedstock by cooling to obtain the final shape of the dental article; and
e) demolding the molded dental article.

As discussed above and as will be explained in detail in connection with the figures, this allows structures, which will ultimately be located in the distal cavity area of the mold cavity, to be formed at a relatively high pressure in close proximity to the mold gate. After their formation, these structures are continuously moved away from the mold gate allowing the remaining structures of the mold cavity to be continuously formed at a constantly high pressure of the feedstock. The problem of an insufficient density of the feedstock at the distal cavity area can thereby be circumvented.

According to a primary aspect, the process of the invention comprises the steps of
α) setting the apparatus to an initial stage mode M2, in which the core pin (56) and the sleeve (54) are set to their final position (corresponding to the position of the inner thread and the opening of the blind hole in the dental article to be molded);
β) filling feedstock into the mold cavity (14) by injecting it from the injection unit (16) through the mold gate (30);
γ) after filling moving the ram element (58) along longitudinal axis A relative to the core pin (56) and the sleeve (54) to decrease the volume of the mold cavity (14) until the ram element reaches its final position;
δ) solidifying the feedstock by cooling to obtain the final shape of the dental article; and
ε) demolding the dental article.

With regard to this primary aspect, it is further preferred that the demolding step ε) comprises the sub-steps of rotating the core pin to unscrew it from the molded dental article and to move the core pin and the sleeve axially in a direction out of the mold cavity. Thus, a demolded article can be obtained which features all the structures of the final article, and which requires no further processing of the article.

As mentioned above, the present disclosure covers both the process of the primary and of the secondary aspect separately as well as in combination with each other.

According to a preferred embodiment applying to both aspects, the process comprises the further step of heating the feedstock, as mentioned above. Preferably, the feedstock is heated in the injection unit, more specifically in the barrel of the injection unit, where it is conveyed from a feed zone of the barrel towards a nozzle and from which it is transferred, optionally under further heating, through the transfer channel and the mold gate into the mold cavity. In particular, heating of the feedstock in the injection unit and/or the transfer channel is primarily achieved by conventional heating means. Specifically, the feedstock is conveyed in the barrel by means of a conveying screw, and a plastification or melting can be achieved by friction generated by rotation of the screw, optionally combined with further heating elements. This plastification or melting results in a reduction of the viscosity of the feedstock in a temperature-dependent manner. Preferably, the temperature scheme is such that directly before injection, *i.e.* at the nozzle of the transfer channel, the temperature of the feedstock is in a range of from 160°C to 200°C.

Typically, the temperature, at which the mold is kept, depends on the specific feedstock used and is chosen such that it allows a good flowability of the feedstock during injection into the mold cavity. Preferably, the mold is kept at a temperature in a range from room temperature to 60°C. There is, according to this preferred embodiment, no need for cooling the mold before demolding of the article, which allows the process of the present invention to be applied in large-scale and at a high throughput.

The holding pressure applied during the holding phase, i.e. the phase after filling, is preferably between 300 bar and 1200 bar, more preferably between 400 bar and 1000 bar, and most preferably between 600 bar and 900 bar. It is, however, understood that the optimum holding pressure can vary depending on the specific feedstock used.

In a more general definition, which encompasses both the primary and the secondary aspects of the invention, the present disclosure relates to the following powder injection molding apparatus (hereinafter referred to Embodiment 1) and process for the preparation of a dental article (hereinafter referred to Embodiment 11). Preferred embodiments of this apparatus and this process are defined in Embodiments 2 to 10 and 12 to 14, respectively:
Embodiment 1:
   A powder injection molding apparatus for molding a dental article, said apparatus comprising
   A) an injection unit (16) comprising a barrel (18), a nozzle (24) and conveying means arranged in the barrel for conveying feedstock in the direction towards the nozzle, and
   B) a mold (10) enclosing a mold cavity (14) fluidically connected with the injection unit via a mold gate (30), said mold cavity extending along a longitudinal axis A from a proximal cavity area (36), into which the mold gate opens, to a distal cavity area (40),
   characterized in that the mold comprises a mold block (11) and a mold piston (32), which together delimit the mold cavity (14), the mold piston (32) being slideably arranged in the mold block (11) and moveable in relation to the mold block (11) along the longitudinal axis A.
Embodiment 2: The powder injection molding apparatus according to Embodiment 1, characterized in that the mold piston (32) is arranged in the mold block (11) such that during its movement along the longitudinal axis A the volume of the mold cavity (14) is increased or decreased.
Embodiment 3: The powder injection molding apparatus according to any of the preceding Embodiments, characterized in that the mold piston (32) is arranged in the mold block (11) such that during its movement in the direction away from the mold gate (30), the volume of the mold cavity (14) is increased.
Embodiment 4: The powder injection molding apparatus according to any of the preceding Embodiments, characterized in that the mold piston (32) comprises a guiding region (44) extending in longitudinal direction and being in the form of a cylinder, the mantle surface of which being fitted into a guiding tube (34) arranged in the mold block (11).
Embodiment 5: The powder injection molding apparatus according to any of the preceding Embodiments, characterized in that an end region (42) of the mold piston (32) reaching into the mold cavity (14) has the form corresponding to a blind hole arranged in the dental article to be molded.
Embodiment 6: The powder injection molding apparatus according to Embodiment 5, characterized in that the end region (42) comprises a leading end portion (46), at least a part of which having the shape of an outer thread (50) corresponding to an inner thread in the blind hole of the dental article to be molded.
Embodiment 7: The powder injection molding apparatus according to Embodiment 5 or 6, characterized in that the end region (42) further comprises a shaft portion (48), which in the longitudinal direction of the mold piston (32) pointing away from the mold cavity (14) is arranged adjacent to the leading end portion (46), wherein at least part of the shaft portion has the shape of a non-circular cylinder, in particular of a multi-cornered shaft, corresponding to a respective opening in the blind hole of the dental article to be molded.
Embodiment 8: The powder injection molding apparatus according to Embodiment 7, characterized in that the mold piston (32) comprises a sleeve (54) and a core pin (56), which is circumferentially enclosed by the sleeve and is rotatable in relation to the sleeve, the core pin forming the leading end portion (46) and the sleeve (54) forming the shaft portion (48) of the mold piston (32).
Embodiment 9: The powder injection molding apparatus according to Embodiment 8, characterized in that the mold piston (32) further contains a ram element (58) arranged coaxially to the sleeve (54) and circumferentially enclosing the sleeve, said ram element being axially movable in relation to the sleeve.
Embodiment 10: The powder injection molding apparatus according to any of the preceding Embodiments, characterized in that the injection unit and/or the mold comprise a heating element (26) for heating the feedstock.
Embodiment 11:
   A process for the preparation of a dental article, in particular a dental implant or a dental implant abutment, using the powder injection molding apparatus according to any one of Embodiments 1 to 10.
Embodiment 12: The process according to Embodiment 11 comprising the steps of
   a) setting the apparatus to an initial stage mode M1, in which the mold piston (32) is set such that the mold cavity (14) has a volume Vᵢₙᵢₜᵢₐₗ;
   b) filling a first portion of the feedstock into the mold cavity (14) by injecting it from the injection unit (16) through the mold gate (30) until a pressure p₀ is reached in the volume Vᵢₙᵢₜᵢₐₗ of the mold cavity;
   c) continuing filling with a second portion of the feedstock while simultaneously moving the mold piston (32) in the direction of the longitudinal axis A away from the mold gate (30), thus increasing the volume of the mold cavity (14);
   d) solidifying the feedstock by cooling to obtain the final shape of the dental article; and
   e) demolding the molded dental article.
Embodiment 13: The process according to Embodiment 11 or 12 using the powder injection molding apparatus according to Embodiment 9 comprising the steps of
   α) setting the apparatus to an initial stage mode M2, in which the core pin (56) and the sleeve (54) are set to their final position;
   β) filling feedstock into the mold cavity (14) by injecting it from the injection unit (16) through the mold gate (30);
   γ) after filling moving the ram element (58) along longitudinal axis A relative to the core pin (56) and the sleeve (54) to decrease the volume of the mold cavity (14) until the ram element reaches its final position;
   δ) solidifying the feedstock by cooling to obtain the final shape of the dental article; and
   ε) demolding the dental article.
Embodiment 14: The process according to Embodiment 13, wherein the demolding step ε) comprises the sub-steps of rotating the core pin (56) to unscrew it from the molded dental article and to move the core pin (56) and the sleeve (54) axially in a direction out of the mold cavity (14).

### EXAMPLES

The present invention is further illustrated by way of the following examples together with the attached figures, of which
- Fig. 1: shows a graph relating to a general PIM process cycle and indicating the pressure measured at the injection screw over time, the graph representing the main injection phases of the cycle;
- Fig. 2: shows schematically a powder injection molding apparatus where the mold has a bi-bloc configuration according to the present invention;
- Fig. 3: shows a perspective view of a part of a PIM apparatus according to the present invention with the mold piston being arranged in a first position (A) and a second position (B); and
- Fig. 4: shows a longitudinal section of a part of a further embodiment of the present invention, with the mold piston and its components being shown in a filling position and a pressing position.

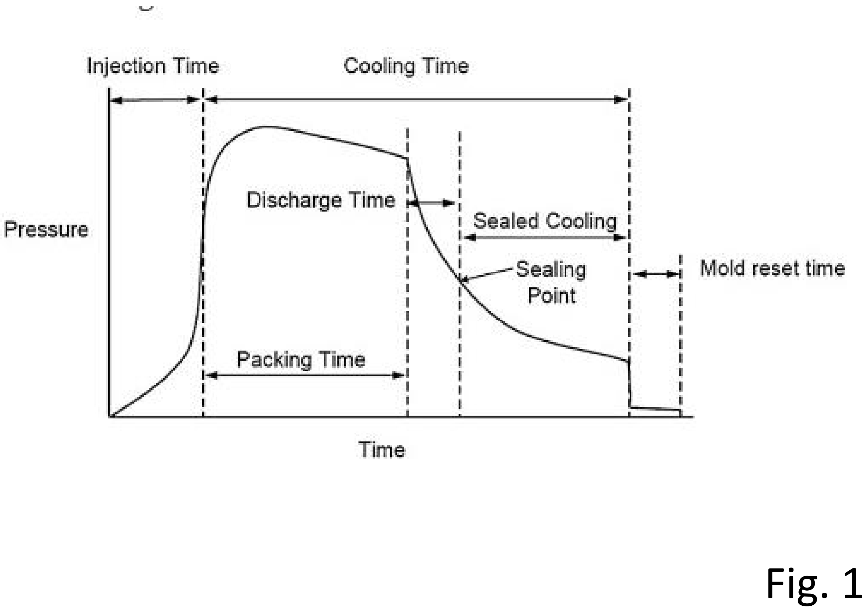

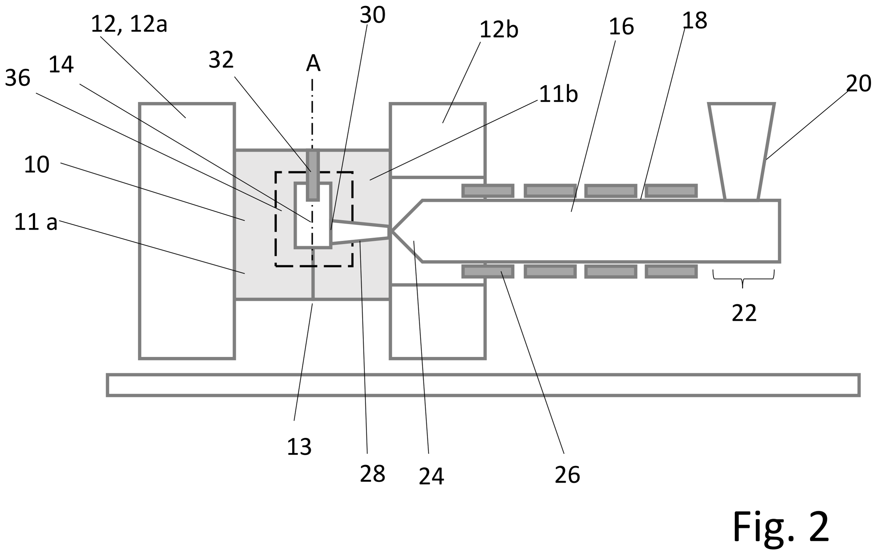

As shown in Fig. 1, a general PIM process cycle contains the subsequent main steps of injection, cooling and mold reset. In the injection step, an injection pressure is applied with an injection unit. Specifically, the pressure results from a main hydraulic pressure pushing against the back end of the injection screw in the injection unit. In this step, the injection pressure increases fast, especially when the feedstock hits the mold gate 30 (see *e.g.* Fig. 2).

The cooling step can be subdivided into a packing phase (or holding phase), a discharge phase and a phase of sealed cooling. In the packing or holding phase, the pressure determined with the injection screw reaches its maximum and after that gradually decreases due to the feedstock beginning to cool. The transition from the packing phase to the discharge phase is marked by an abrupt pressure decrease (starting at the point at which the injection screw is allowed to move back). The pressure decrease continues during the sealed cooling, which starts at the point when the sealing point is achieved (which is the point at which the mold gate is sealed) . At the end of the cycle, the mold is reset, and the pressure is again set to the value at the beginning of the injection step.

As shown in Fig. 2, the powder injection molding apparatus comprises a mold 10 containing a mold block 11, which comprises two mold block parts, namely a first mold block part 11a and a second mold block part 11b, clamped together by a clamping unit 12 and enclosing a mold cavity 14.

The first mold block part 11a has a first contact surface facing the second mold block part 11b in the assembled state and the second mold part 11b has a second contact surface facing the first mold part 11a in the assembled state. The first and the second contact surface form in the assembled state of the mold a parting surface 13 between the first mold block part 11a and the second mold block part 11b.

The clamping unit 12 is designed to retain the first mold block part 11a and the second mold block part 11b in contact with each other under the effect of a clamping force. The clamping unit 12 comprises a fixed part 12b and a movable part 12a, wherein the movable part 12a can be moved relative to the fixed part 12b.

The apparatus further comprises an injection unit 16 containing a barrel 18 arranged on the side of the fixed part 12b opposed to the mold, a hopper 20 for feeding the feedstock into a feed zone 22 of the barrel, a nozzle 24 and a screw (not shown) arranged axially in the barrel and designed for conveying the feedstock in direction from the feed zone 22 towards the nozzle 24, thereby passing a compression zone and a metering zone (not shown) of the barrel. For heating the feedstock on its path towards the nozzle 24, heating elements 26 encasing the barrel 18 are provided.

The nozzle 24 opens into a transfer channel 28 arranged in the mold 10 and leading into the mold cavity 14 via a mold gate 30. The mold cavity extends along a longitudinal axis A from a proximal cavity area, into which the mold gate opens, to a distal cavity area. Hence, the mold cavity (14) is fluidically connected with the injection unit (16) via the mold gate 30. The term "fluidically connected" as used in this context means that the mold cavity and the injection unit are connected in a manner that feedstock can flow from the injection unit into the mold cavity.

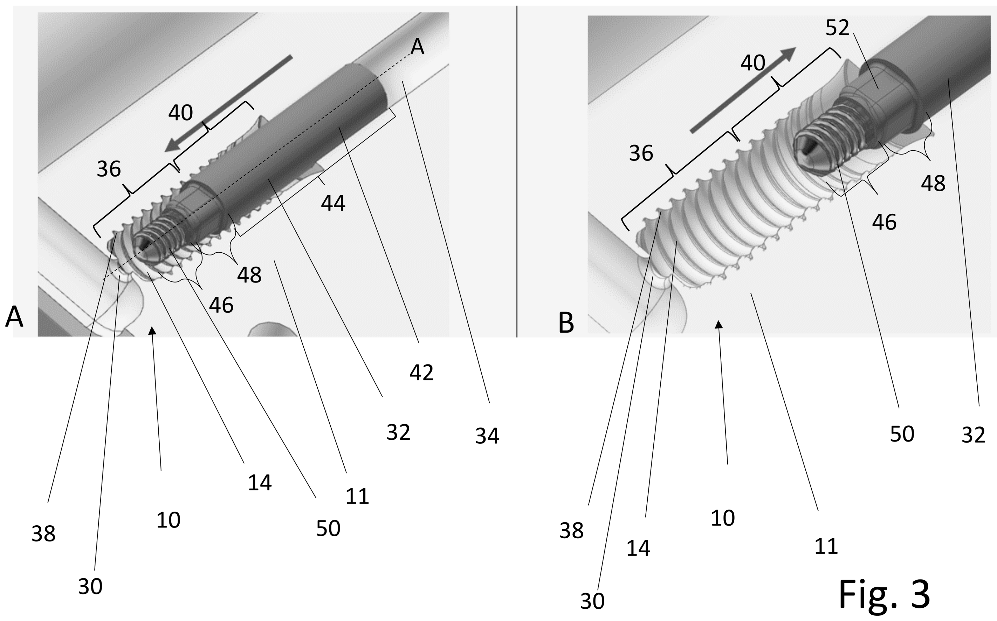

As also shown in Fig. 3 in more detail, the mold 10 comprises - apart from the mold block 11 - a mold piston 32, which together with the mold block 11 delimits the mold cavity 14. The mold piston 32 is slideably arranged in the mold block 11, specifically in a guiding tube 34 arranged in the mold block, and moveable in relation to the mold block 11 along the longitudinal axis A.

The mold shown in Fig. 3 is designed for the molding of a dental implant of a two-part dental implant system. In the proximal cavity area 36, the inner wall of the mold cavity 14 contains an inner thread 38 corresponding to the outer thread of the anchoring part of the dental implant to be molded. In the distal cavity area 40, the mold cavity 14 widens such that its shape corresponds to the cup-shape of the dental implant's mounting part.

The mold piston 32 comprises an end region 42, which reaches into the mold cavity 14, and a guiding region 44 in the form of a cylinder, the mantle surface of which being fitted into the guiding tube 34 arranged in the mold block 11. In the embodiment shown, the guiding region 42 of the mold piston 32 and the guiding tube 34 of the mold block 11 are in the form of a circular cylinder.

The end region 42 has the form corresponding to a blind hole arranged in the dental implant to be molded and extending in a longitudinal direction of the dental implant. Specifically, the end region comprises a leading end portion 46 and a shaft portion 48, which in longitudinal direction of the mold piston 32 pointing away from the mold cavity 14 is arranged adjacent to the leading end portion 46. The leading end portion 46 comprises an outer thread 50 corresponding to an inner thread in the blind hole of the dental implant to be molded. The shaft portion 48 has the shape of a four-cornered shaft 52, corresponding to a respective opening in the blind hole of the dental implant to rotationally fix the abutment to be mounted on the dental implant.

This embodiment allows a PIM process to be carried out, which allows a dental implant of reduced surface porosity and increased bend strength to be achieved. This process is illustrated by the consecutive situations A and B shown in Fig. 3.

Fig. 3A relates to the situation, in which the apparatus is first set to an initial stage mode M1, with the mold piston 32 being set such that the leading end portion 42 is arranged in close proximity to the mold gate 30. In the embodiment shown, also part of the guide region 44 reaches into the mold cavity 14. In this initial stage mode M1, the mold cavity 14 has a volume Vᵢₙᵢₜᵢₐₗ.

While keeping the mold piston 32 in this initial stage mode M1, a first portion of the feedstock is filled into the mold cavity 14 by injecting it from the injection unit (not shown) through the mold gate 30 until a pressure p₀ is reached in the mold cavity 14. Owed to the leading end portion 46 being arranged in close proximity to the mold gate 30, there is only a small pressure drop and a high pressure is present in the region of the outer thread 50 of the leading end portion 46. This allows the grooves of the thread to be accurately formed.

Once pressure p₀ has been reached, the filling is continued with a second portion of the feedstock. In this step, the mold piston 32 is simultaneously moved in direction of the longitudinal axis A away from the mold gate 30 (as shown by the arrow), thus increasing to volume of the mold cavity 14. The movement is continued until the mold piston 32 reaches its final position, the respective situation being shown in Fig. 3B. In this situation, the whole volume of the mold cavity 14 corresponding to the dental implant to be molded is finally filled.

The feedstock is then solidified by cooling to obtain the final shape of the dental implant, and the molded dental implant is demolded.

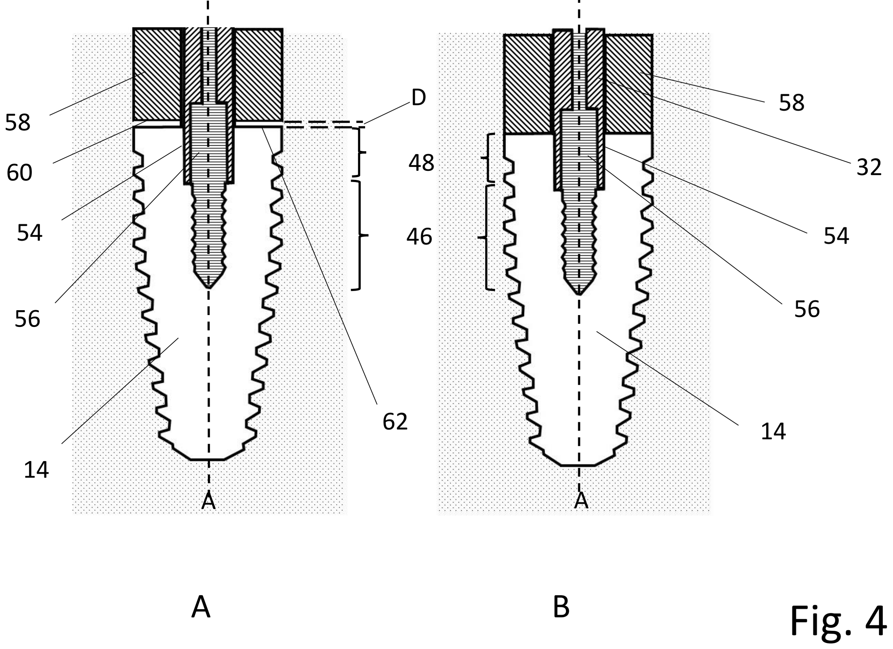

A further embodiment of the apparatus and the process of the present invention is illustrated in Fig. 4. Two consecutive situations in the molding process are shown by A and B of Fig. 4.

Compared to the apparatus shown in Fig. 3, the mold piston 32 of the embodiment shown in Fig. 4 comprises an outer sleeve 54 and an inner core pin 56, which is circumferentially enclosed by the sleeve and is rotatable in relation to the sleeve. The front-end portion of the core pin 56 forms the leading end portion 46 and the front-end portion of the sleeve 54 forms the shaft portion 48 of the mold piston 32.

The mold piston 32 further contains a ram element 58 arranged coaxially to the sleeve 54 and circumferentially enclosing the sleeve. The ram element 58 is axially movable in relation to the sleeve 54 and comprises a pressing surface 60 which lies in a plane perpendicular to the longitudinal axis A of the mold cavity 14.

This embodiment of the apparatus allows a further process to be carried out, which may be combined with the process described above in the context of Fig. 3.

According to this process, the apparatus is set to an initial stage mode M2 (shown in Fig. 4A), in which the inner core pin 56 and the outer sleeve 54 are set to their final position corresponding to the position of the blind hole of the dental article to be molded. In particular, the outer thread of the leading end portion and the cornered shaft of the shaft portion are arranged in the mold cavity in a position corresponding to the inner thread and the opening of the dental implant's blind hole.

The ram element 58 is in this position (*i.e.* in initial stage mode M2) kept at a distance D from its final position 62, which corresponds to the coronal end of the dental implant to be molded.

A first portion of the feedstock is then filled into the mold cavity 14 by injecting it from the injection unit through the mold gate (not shown in Fig. 4).

After filling, the ram element 58 is then moved along longitudinal axis A relative to the core pin 56 and the sleeve 54 to decrease the volume of the mold cavity until the ram element reaches its final position 62; this situation is shown in Fig. 4B. Thus, the pressure in the holding phase can thus be kept constant or even increased according to this embodiment of the invention.

The feedstock is then solidified by cooling to obtain the final shape of the dental article, and the dental article is demolded. Demolding contains the sub-step of rotating the core pin to unscrew it from the molded dental article and to move the core pin and the sleeve axially in a direction out of the mold cavity. Ultimately, the mold parts are then separated from each other allowing the molded article to be removed from the mold cavity.

Owed to the pressing force of the ram element, a lower density of the feedstock in the distal cavity area, which might occur due to the pressure drop of the feedstock during filling, can be compensated after filling. This also allows a decrease in the surface porosities and the volume flaws, and ultimately an increase in the bend strength of the article to be achieved.

As mentioned above, the processes illustrated in Fig. 3 and Fig. 4 can be combined with each other. Specifically, a mold piston as shown in Fig. 4 can be used in the process according to Fig. 3. In the process step shown in Fig. 3B, this mold piston is moved along the longitudinal axis A until the core pin and the sleeve reach their final position whereas the ram element is moved further to the pre-pressing position shown in Fig. 4A. After the filling has taken place, the ram element is then moved in its final position, as described above, thus further compacting the feedstock in the distal cavity region.

### List of reference numerals

- 10: mold
- 11: mold block
- 11a, 11b: first and second part of mold block
- 12: clamping unit
- 12a, 12b: movable and fixed part of clamping unit
- 14: mold cavity
- 16: injection unit
- 18: barrel
- 20: hopper
- 22: feed zone
- 24: nozzle
- 26: heating elements
- 28: transfer channel
- 30: mold gate
- 32: mold piston
- 34: guiding tube
- 36: proximal cavity area
- 38: inner thread
- 40: distal cavity area
- 42: end region of mold piston
- 44: guiding region of the mold piston
- 46: leading end portion
- 48: shaft portion
- 50: outer thread of leading end portion
- 52: four-cornered shaft
- 54: sleeve
- 56: core pin
- 58: ram element
- 60: pressing surface
- 62: final position of ram element/ coronal end of dental implant to be molded

## Claims

1. A powder injection molding apparatus for molding a dental article, said apparatus comprising
A) an injection unit (16) comprising a barrel (18), a nozzle (24) and conveying means arranged in the barrel for conveying feedstock in the direction towards the nozzle, and
B)a mold (10) enclosing a mold cavity (14) fluidically connected with the injection unit via a mold gate (30), said mold cavity extending along a longitudinal axis A from a proximal cavity area (36), into which the mold gate opens, to a distal cavity area (40),
**characterized in that** the mold comprises a mold block (11) and a mold piston (32), which together delimit the mold cavity (14), the mold piston (32) being slideably arranged in the mold block (11) and moveable in relation to the mold block (11) along the longitudinal axis A, that an end region (42) of the mold piston (32) reaching into the mold cavity (14) has the form corresponding to a blind hole arranged in the dental article to be molded, that the end region (42) further comprises a shaft portion (48), which in the longitudinal direction of the mold piston (32) pointing away from the mold cavity (14) is arranged adjacent to the leading end portion (46), wherein at least part of the shaft portion has the shape of a non-circular cylinder, in particular of a multi-cornered shaft, corresponding to a respective opening in the blind hole of the dental article to be molded, that the mold piston (32) comprises a sleeve (54) and a core pin (56), which is circumferentially enclosed by the sleeve and is rotatable in relation to the sleeve, the core pin forming the leading end portion (46) and the sleeve (54) forming the shaft portion (48) of the mold piston (32) and that the mold piston (32) further contains a ram element (58) arranged coaxially to the sleeve (54) and circumferentially enclosing the sleeve, said ram element being axially movable in relation to the sleeve.

2. The powder injection molding apparatus according to claim 1, **characterized in that** the mold piston (32) is arranged in the mold block (11) such that during its movement along the longitudinal axis A the volume of the mold cavity (14) is decreased.

3. The powder injection molding apparatus according to any of the preceding claims, **characterized in that** the mold piston (32) comprises a guiding region (44) extending in longitudinal direction and being in the form of a cylinder, the mantle surface of which being fitted into a guiding tube (34) arranged in the mold block (11).

4. The powder injection molding apparatus according to any of the preceding claims, **characterized in that** the end region (42) comprises a leading end portion (46), at least a part of which having the shape of an outer thread (50) corresponding to an inner thread in the blind hole of the dental article to be molded.

5. The powder injection molding apparatus according to any of the preceding claims, **characterized in that** at least part of the shaft portion of the end region (42) has the shape of a multi-cornered shaft, corresponding to a respective opening in the blind hole of the dental article to be molded.

6. The powder injection molding apparatus according to any of the preceding claims, **characterized in that** the injection unit and/or the mold comprise a heating element (26) for heating the feedstock.

7. A process for the preparation of a dental article, in particular a dental implant or a dental implant abutment, using the powder injection molding apparatus according to any one of claims 1 to 6.

8. The process according to claim 7 using the powder injection molding apparatus according to any of the preceding claims comprising the steps of
α) setting the apparatus to an initial stage mode M2, in which the core pin (56) and the sleeve (54) are set to their final position;
β) filling feedstock into the mold cavity (14) by injecting it from the injection unit (16) through the mold gate (30);
γ) after filling moving the ram element (58) along longitudinal axis A relative to the core pin (56) and the sleeve (54) to decrease the volume of the mold cavity (14) until the ram element reaches its final position;
δ) solidifying the feedstock by cooling to obtain the final shape of the dental article; and
ε) demolding the dental article.

9. The process according to claim 8, wherein the demolding step ε) comprises the sub-steps of rotating the core pin (56) to unscrew it from the molded dental article and to move the core pin (56) and the sleeve (54) axially in a direction out of the mold cavity (14).
